# EUROPÄISCHE PATENTSCHRIFT

(11) **EP 2 029 459 B1**
(45) Veröffentlichungstag und Bekanntmachung des Hinweises auf die Patenterteilung: **14.10.2009**
(21) Anmeldenummer: 07711235.7
(22) Anmeldetag: 16.03.2007
(51) Int. Cl.: B65G 1/00

(54) **GREIFSYSTEM FÜR GESTAPELTES STÜCKGUT**
GRIPPER SYSTEM FOR STACKED UNIT LOADS
SYSTÈME DE PRÉHENSION POUR MARCHANDISE DE DÉTAIL EMPILÉE

(30) Priorität: 11.05.2006 DE 102006022278
(43) Veröffentlichungstag der Anmeldung: 04.03.2009
(73) Patentinhaber: Deutsche Post AG, 53113 Bonn (DE)
(72) Erfinder: BRAUNSCHWEIGER, Nils, 28844 Weyhe (DE); WELLBROCK, Eckard, 28213 Bremen (DE); FRANCK, Hermann, 27721 Ritterhude (DE); ECHELMEYER, Wolfgang, 27711 Osterholz-Scharmbeck (DE); SCHMIDT, Kolja, 28203 Bremen (DE)
(74) Vertreter: Jostarndt, Hans-Dieter
(86) Internationale Anmeldenummer: PCT/DE2007/000481
(87) Internationale Veröffentlichungsnummer: WO 2007/131464

(56) Entgegenhaltungen:
- EP-A- 1 321 397
- EP-A1- 1 524 216
- DE-A1- 4 328 155
- DE-A1- 19 959 285
- FR-A- 2 617 078
- US-A- 5 984 623

## Beschreibung

Die vorliegende Erfindung betrifft ein Greifsystem für gestapeltes Stückgut, umfassend eine erste Greifeinheit zum Greifen eines Stückgutes von dessen vorderen Seitenfläche, eine zweite Greifeinheit zum Greifen eines Stückgutes von einer im rechten Winkel zu dessen vorderen Seitenfläche stehenden zweiten Seitenfläche und eine Antriebseinrichtung für die zweite Greifeinheit.

Ein Greifsystem der eingangs genannten Art ist aus der EP 1 524 216 A1 bekannt. Es weist den Nachteil auf, daß beispielsweise in einer Paketwand etwas zurückstehende, von oben nicht zugängliche Pakete nicht ergriffen werden können, da es nicht nahe genug an die vordere Seitenfläche des Pakets herangeführt werden kann.

Der Erfindung liegt somit die Aufgabe zugrunde, das gattungsgemäße Greifsystem so weiterzubilden, daß der vorgenannte Nachteil beseitigt, zumindest aber verringert wird.

Erfindungsgemäß wird diese Aufgabe bei dem gattungsgemäßen Greifsystem dadurch gelöst, daß die zweite Greifeinheit aus einer Anfahr- bzw. Ruheposition, in der die zweite Greifeinheit und die Antriebseinrichtung bei Betrachtung von der Greifseite der ersten Greifeinheit hinter der ersten Greifeinheit angeordnet sind und die Außenabmessungen des Greifsystems bei Betrachtung von der Greifseite der ersten Greifeinheit nicht die Abmessungen der vorderen Seitenfläche eines erwarteten kleinsten zu ergreifenden Stückgutes überschreiten, in eine Greifposition bringbar ist, in der die erste Greifeinheit zum Greifen des Stückgutes von dessen vorderen Seitenfläche positioniert ist und die zweite Greifeinheit zum Greifen des Stückgutes von dessen zweiten Seitenfläche positioniert ist.

Gemäß einer besonderen Ausführungsform der Erfindung kann vorgesehen sein, daß die zweite Greifeinheit und die Antriebseinrichtung bei Betrachtung von der Greifseite der ersten Greifeinheit so dimensioniert und hinter der ersten Greifeinheit angeordnet sind, daß sie nicht über die erste Greifeinheit seitlich überstehen.

Das Greifsystem kann zum Beispiel für einen Roboter zum Ergreifen von Paketen vorgesehen sein. Da die ersten und zweiten Greifeinheiten im rechten Winkel zueinander angeordnet sind, werden derartige Greifsysteme auch als Winkelgreifer bezeichnet.

Gemäß einer besonderen Ausführungsform der Erfindung kann vorgesehen sein, daß mindestens eine der ersten und zweiten Greifeinheiten ein Sauggreifer, ein Magnetgreifer, ein Nadelgreifer, ein Elektrostatikgreifer oder ein Adhäsionsgreifer ist. Die Aufzählung ist aber nicht abschließend, da auch andere Greifer eingesetzt werden können, die eine äquivalente Wirkung aufweisen.

Insbesondere kann dabei vorgesehen sein, daß der Sauggreifer ein Saugnapfgreifer, Flachsauggreifer, Faltenbalgsauggreifer oder Flächensauggreifer ist. Selbstverständlich kann zum Beispiel ein Saugnapfgreifer mehrere Saugnäpfe aufweisen. Mit Flächensauggreifer soll ein Flächensaugelement bzw. eine Saugmatte gemeint sein, wie sie zum Beispiel von der Firma Unigripper angeboten wird.

Vorteilhafterweise ist die zweite Seitenfläche die untere oder obere Seitenfläche eines Stückgutes. Die obere Seitenfläche kann zum Beispiel Sinn machen, wenn ein Stückgut aus der obersten Reihe einer Stückgutwand herausgenommen werden soll und oberhalb der obersten Reihe noch Platz zur Verfügung steht. Selbstverständlich ist auch denkbar, daß das Greifsystem drehbar gestaltet ist, so daß je nach Einsatzbedingungen die untere oder die obere Seitenfläche eines Stückgutes ergriffen werden kann.

Weiterhin kann vorgesehen sein, daß in der Anfahr- bzw. Ruheposition die zweite Greifeinheit im rechten Winkel zur ersten Greifeinheit angeordnet ist.

Vorteilhafterweise ist eine mit einer Steuereinrichtung für ein Handhabungsgerät, insbesondere Roboter, und der Antriebseinrichtung verbindbare Sensoreinheit, die einen Scanner und/oder eine CCD-Kamera umfaßt, zur Bestimmung des Abstandes und/oder einer Lageposition des jeweils zu ergreifenden Stückgutes und/oder eines Ansatzpunktes auf der vorderen Seitenfläche des zu ergreifenden Stückgutes und Positionierung des zu ergreifenden Stückgutes vorgesehen. Selbstverständlich ist auch möglich, daß eine weitere Steuereinrichtung für diesen Zweck vorgesehen ist. Mit dem Abstand ist der Abstand zwischen dem Greifsystem und dem Stückgut, zum Beispiel der vorderen Seitenfläche des Stückgutes, gemeint.

Gemäß einer besonderen Ausführungsform der Erfindung kann vorgesehen sein, daß das Greifsystem mittels einer Steuereinrichtung so steuerbar ist, daß erst die erste Greifeinheit die vordere Seitenfläche des Stückgutes ergreift und danach die zweite Greifeinheit die zweite Seitenfläche des Stückgutes ergreift. Dabei kann die erste Greifeinrichtung zum zumindest teilweisen Herausziehen des Stückgutes aus einer Stückgutwand verwendet werden, bevor die zweite Greifeinheit die zweite Seitenfläche des Stückgutes teilweise oder vollständig ergreift.

Gemäß einer weiteren besonderen Ausführungsform der Erfindung kann vorgesehen sein, daß die Antriebseinrichtung eine Schwenk- bzw. Dreheinrichtung zum Schwenken bzw. Drehen der zweiten Greifeinheit aus der Anfahr- bzw. Ruheposition in die Greifposition umfaßt.

Günstigerweise ist die zweite Greifeinheit mittels der Schwenk- bzw. Dreheinrichtung um eine horizontale oder vertikale Achse schwenk- bzw. drehbar. Die horizontale bzw. vertikal Achse befindet sich dabei außerhalb der zweiten Greifeinheit.

Gemäß einer weiteren besonderen Ausführungsform der Erfindung kann vorgesehen sein, daß die Antriebseinrichtung eine Parallelversetzeinrichtung zum parallelen Versetzen der zweiten Greifeinheit aus der Anfahr- bzw. Ruheposition in die Greifposition umfaßt.

Günstigerweise umfaßt die Parallelversetzeinrichtung zwei jeweils mittels eines Pneumatikzylinders antreibbare Pendelstützenpaare.

Andererseits kann auch vorgesehen sein, daß die Parallelversetzeinrichtung eine elliptische Führung und einen Linearantrieb umfaßt.

Wiederum gemäß einer alternativen Ausführungsform umfaßt die Antriebseinrichtung eine Klappeinrichtung zum Klappen der zweiten Greifeinheit aus der Anfahr- bzw. Ruheposition in die Greifposition.

Günstigerweist ist die zweite Greifeinheit mittels der Klappeinrichtung um eine horizontale oder vertikale Achse klappbar.

Gemäß einer weiteren besonderen Ausführungsform der Erfindung ist eine Antriebseinrichtung für die erste Greifeinheit vorgesehen und sind die ersten und zweiten Greifeinheiten aus einer Anfahr- bzw. Ruheposition, in der die zweite Greifeinheit und die Antriebseinrichtungen für die ersten und zweiten Greifeinheiten bei Betrachtung von der Greifseite der ersten Greifeinheit so hinter der ersten Greifeinheit angeordnet, daß sie nicht über die erste Greifposition überstehen, in eine Greifposition bringbar sind, in der die erste Greifeinheit zum Greifen des Stückgutes von den vorderen Seitenflächen positioniert ist und die zweite Greifeinheit zum Greifen des Stückgutes von deren zweiten Seitenfläche positioniert ist.

Vorteilhafterweise ist die erste Greifeinheit ein erster Flächensauggreifer, ist die zweite Greifeinheit ein zweiter Flächensauggreifer, umfaßt die Antriebseinrichtung für die erste Greifeinheit einen ersten Linearantrieb zum horizontalen Verfahren des ersten Flächensauggreifers in der Saugkraft-Wirkrichtung des ersten Flächensauggreifers und einen zweiten Linearantrieb zum vertikalen Verfahren des ersten Linearantriebs und umfaßt die Antriebseinrichtung für die zweite Greifeinheit einen dritten Linearantrieb zum horizontalen Verfahren des zweiten Flächensauggreifers in der Saugkraft-Wirkrichtung des ersten Flächesauggreifers, wobei die ersten und dritten Linearantriebe in einer vertikalen Ebene über- bzw. untereinander angeordnet sind.

Insbesondere kann dabei vorgesehen sein, daß mindestens einer der ersten, zweiten und dritten Linearantriebe einen geführten Zylinder umfaßt.

Alternativ ist denkbar, daß mindestens einer der ersten, zweiten und dritten Linearantriebe ein kolbenstangenloser Linearantrieb ist.

Schließlich ist mindestens einer der ersten, zweiten und dritten Linearantriebe pneumatisch betreibbar ist.

Der Erfindung liegt die überraschende Erkenntnis zugrunde, daß durch die spezielle Gestaltung und Anordnung der zweiten Greifeinheit und der Antriebseinrichtung für die zweite Greifeinheit im Verhältnis zur ersten Greifeinheit ermöglicht wird, daß Stückgüter auch in schwerer zugänglichen Positionen ergriffen und herausgenommen werden können.

Weitere Merkmale und Vorteile der Erfindung ergeben sich aus den Ansprüchen und der nachstehenden Beschreibung, in der zwei Ausführungsbeispiele anhand der schematischen Zeichnungen im einzelnen erläutert sind. Dabei zeigt:
- Figur 1: eine Seitenansicht von einem Greifsystem gemäß einer besonderen Ausführungsform der Erfindung im Einsatz in einer ersten Phase;
- Figur 2: eine Seitenansicht des Greifsystems von Figur 1 im Einsatz in einer zweiten Phase;
- Figur 3: eine Seitenansicht des Greifsystems von Figur 1 im Einsatz in einer dritten Phase;
- Figur 4: eine Seitenansicht des Greifsystems von Figur 1 im Einsatz in einer vierten Phase;
- Figur 5: eine Seitenansicht des Greifsystems von Figur 1 im Einsatz in einer fünften Phase;
- Figur 6: eine perspektivische Ansicht von einem Greifsystem gemäß einer weiteren besonderen Ausführungsform der Erfindung im Einsatz in einer ersten Phase;

- Figur 7: eine perspektivische Ansicht von dem Greifsystem von Figur 6 im Einsatz in einer zweiten Phase;
- Figur 8: eine perspektivische Ansicht von dem Greifsystem von Figur 6 im Einsatz in einer dritten Phase;
- Figur 9: eine perspektivische Ansicht von dem Greifsystem von Figur 6 im Einsatz in einer vierten Phase;
- Figur 10: eine Seitenansicht des Greifsystems von Figur 6 im Einsatz in der ersten Phase;
- Figur 11: eine Seitenansicht des Greifsystems von Figur 7 im Einsatz in der zweiten Phase;
- Figur 12: eine Seitenansicht des Greifsystems von Figur 8 im Einsatz in der dritten Phase;
- Figur 13: eine Seitenansicht des Greifsystems von Figur 9 im Einsatz in der vierten Phase;
- Figur 14: eine Vorderansicht des in den Figuren 6 bis 13 gezeigten Greifsystems in Anfahr- bzw. Ruheposition; und
- Figur 15: eine Vorderansicht des in den Figuren 6 bis 13 gezeigten Greifsystems in Greifposition.

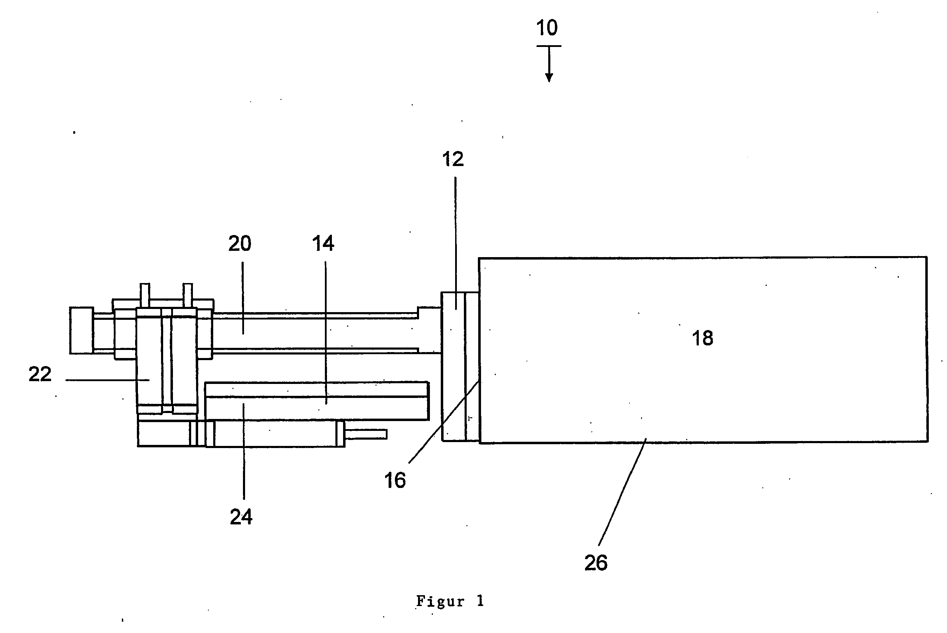

Das in den Figuren 1 bis 5 dargestellte Greifsystem 10 umfaßt einen ersten Flächensauggreifer 12 und einen zweiten Flächensauggreifer 14. Der erste Flächensauggreifer 12 weist eine sich vertikal erstreckende Fläche zum Ansaugen der vorderen Seitenfläche 16 eines quaderförmigen Pakets 18 auf. Das Paket 18 befindet sich in einer Paketwand (nicht gezeigt). Der zweite Flächensauggreifer 14 weist eine sich horizontal erstreckende Fläche auf.

Der erste Flächensauggreifer 12 ist an dem vorderen, das heißt zum Paket 18 hin gewandten Ende eines ersten Linearantriebs 20 zum horizontalen Verfahren des ersten Flächensauggreifers 12 in dessen Saugkraft-Wirkrichtung angebracht. Der erste Linearantrieb 20 ist wiederum mittels eines geführtes Zylinders 22 vertikal verfahrbar.

Der zweite Flächensauggreifer 14 ist mittels eines geführten Zylinders 24, der sich in einer vertikalen Ebene unterhalb des ersten Linearantriebs 20 erstreckt, in derselben Richtung wie der erste Flächensauggreifer 12 horizontal verfahrbar.

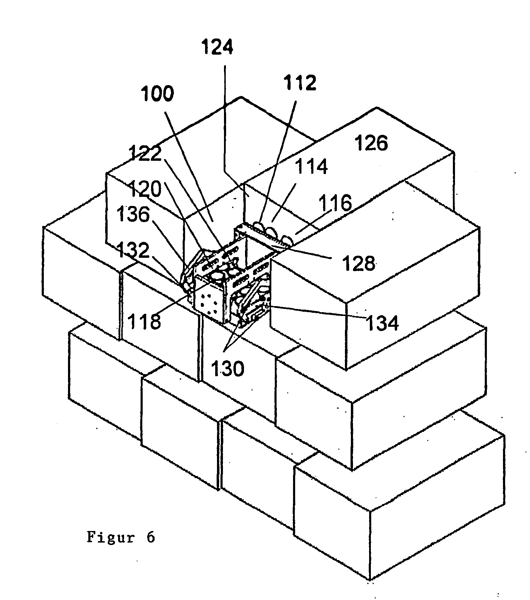

In der in Figur 1 gezeigten ersten Phase befindet sich das Greifsystem 10 in seiner Ruhe- bzw. Anfahrposition, in der sich der zweite Flächensauggreifer 14, der erste Linearantrieb 20, und die geführten Zylinder 22 und 24 hinter dem ersten Flächensauggreifer 12, das heißt in Figur 1 links von dem ersten Flächensauggreifer 12 befinden und nicht seitlich über den ersten Flächensauggreifer 12 - bei Betrachtung von der Ansaugseite des ersten Flächensauggreifers 12, das heißt von der Seite des Paketes 18 vorragen. Die Abmessungen der Fläche des ersten Flächensauggreifers 12 sind geringer als die Abmessungen der vorderen Seitenfläche 16 des Pakets 18 gewählt, um das Paket 18, wenn es sich in einer Paketwand, wie in Figur 6 gezeigt, befindet, mittels des Greifsystems 10 aus der Paketwand herausnehmen zu können.

In Figur 1 ist das Greifsystem 10 mit seinem ersten Flächensauggreifer 12 an die vordere Seitenfläche 16 des Pakets 18 herangefahren worden und übt der erste Flächensauggreifer 12 eine Ansaugwirkung auf die vordere Seitenfläche 16 des Pakets 18 aus.

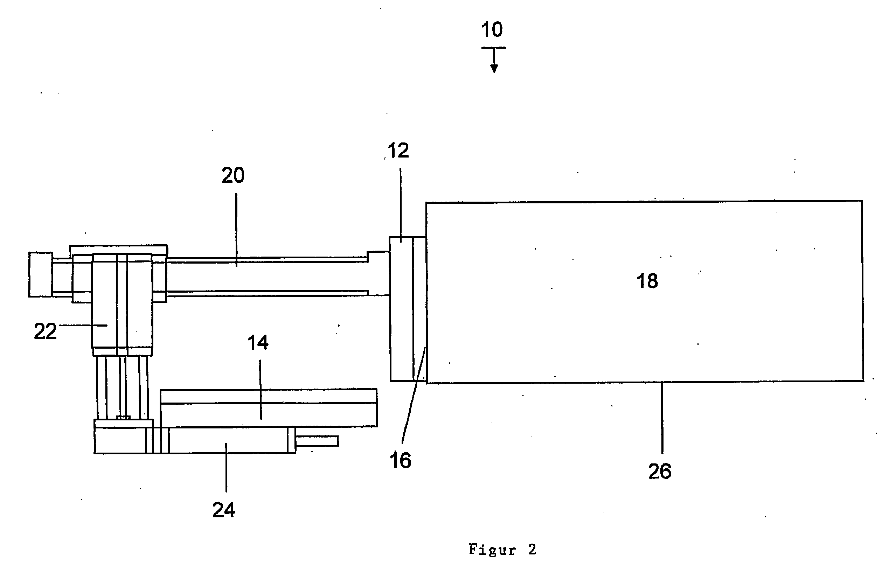

In Figur 2 ist der geführte Zylinder 22 schon etwas nach unten ausgefahren, um den zweiten Flächensauggreifer 14 in Position zu bringen.

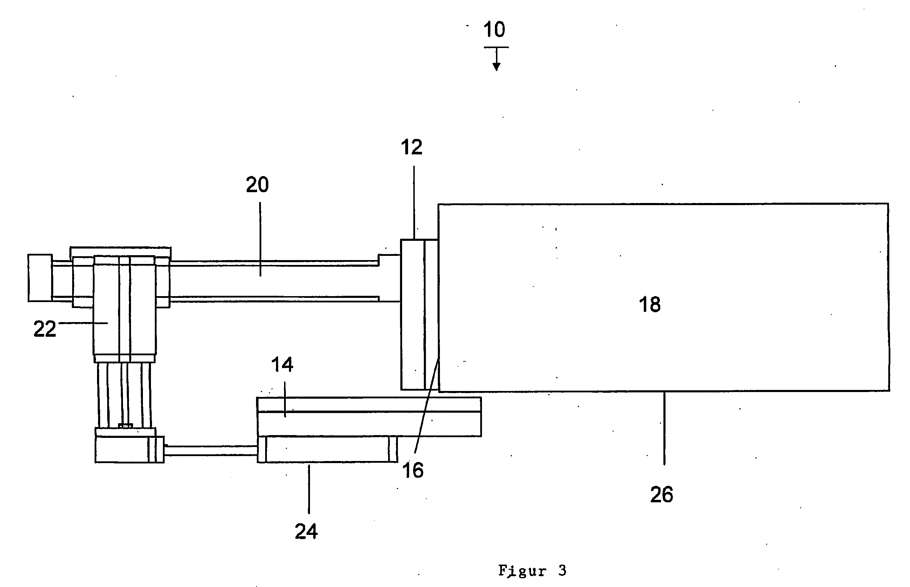

In Figur 3 ist der zweite Flächensauggreifer 14 horizontal nach vorne ausgefahren. Gleichzeitig ist das gesamte Greifsystem 10 zurückbewegt worden, wodurch das Paket 18 teilweise aus der Paketwand gezogen ist.

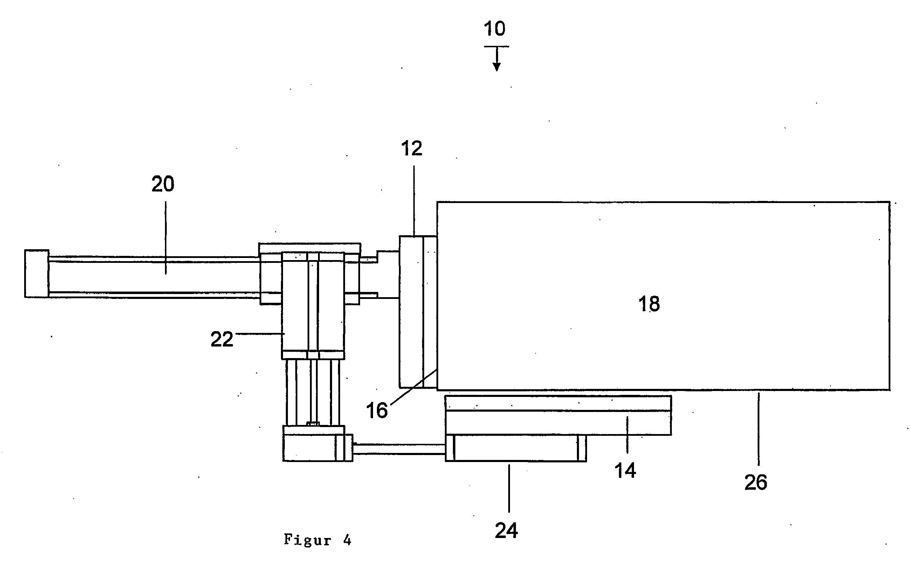

In Figur 4 ist der erste Flächensauggreifer 12 mittels des ersten Linearantriebs 20 horizontal zurückgefahren. Dadurch befindet sich nunmehr der zweite Flächensauggreifer 14 im Bereich der unteren Seitenfläche 26 des Pakets 18. Selbstverständlich können horizontale Bewegungen der ersten und zweiten Flächensauger 12 und 14 auch umgekehrt, in geeigneter Form überschneidend oder simultan erfolgen.

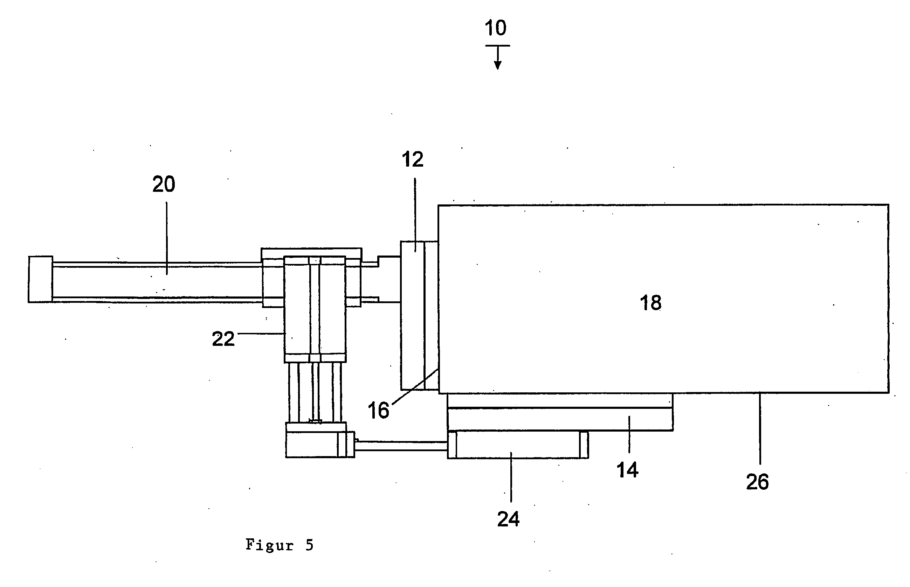

In Figur 5 wird der zweite Flächensauggreifer 14 mit Hilfe des geführten Zylinders 22 gegen die untere Seitenfläche 26 des Pakets 18 gedrückt, damit sich ein Vakuum aufbauen kann.

Das in den Figuren 1 bis 4 gezeigte Greifsystem kann durch seine hohe Beweglichkeit ein besonders großes Spektrum an Stückgütern unterschiedlicher Größe und unterschiedlichem Gewicht greifen. Durch die kompakten Abmessungen bei einer Leerfahrt können Stückgüter aus schwierigsten Lagen entnommen werden. Hierzu zählt vor allem das Entnehmen von Stückgut aus einem bis zur Decke beladenen Raum.

Die Bewegungen werden durch pneumatische Bauteile erzeugt. Diese werden mit einem maximalen Druck von 10 Bar betrieben. Die ersten und zweiten Flächensauggreifer 12 und 14 fixieren das Stückgut, indem sie ein Vakuum zwischen dem Stückgut und einer Saugmatte aufbauen. Das Vakuum wird mit Hilfe von Venturidüsen erzeugt.

Die Befestigung des Greifsystems an einem Roboterflansch kann an verschiedene Anforderungen angepaßt werden.

Ein Laserscanner (nicht gezeigt) detektiert die Unterkanten der Stückgüter und geleitet den Roboter zu einem geeigneten Ansatz.

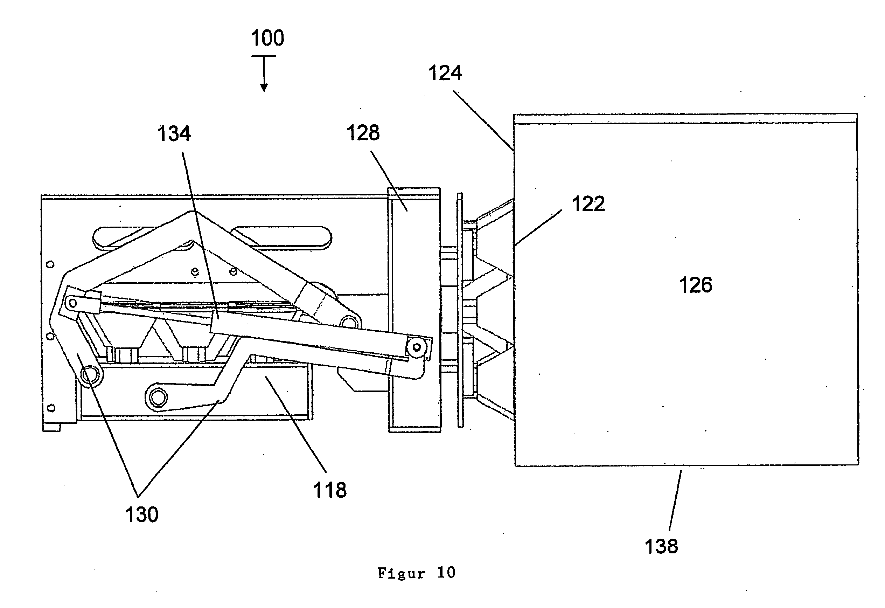

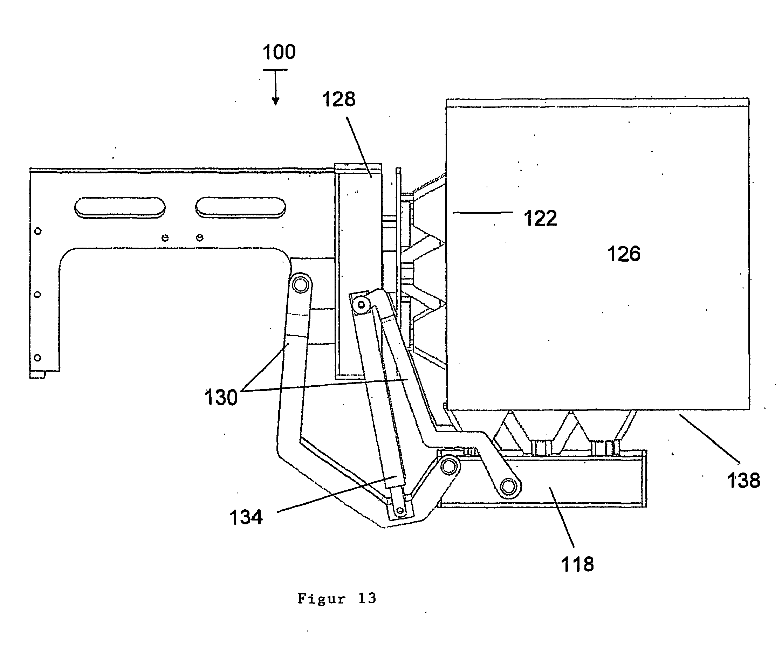

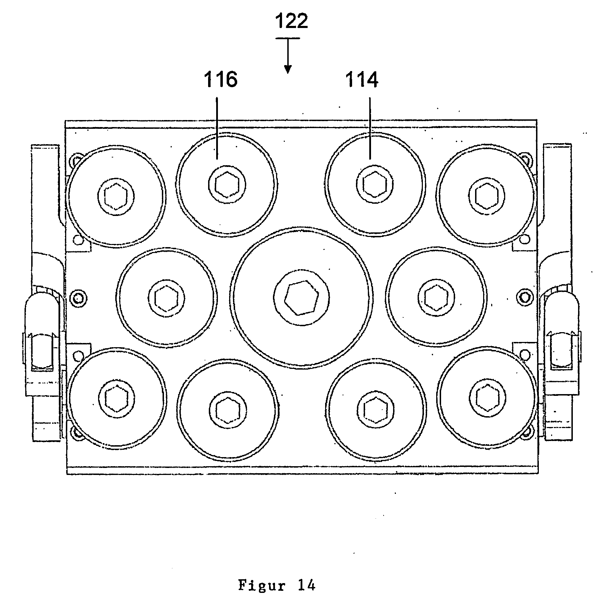

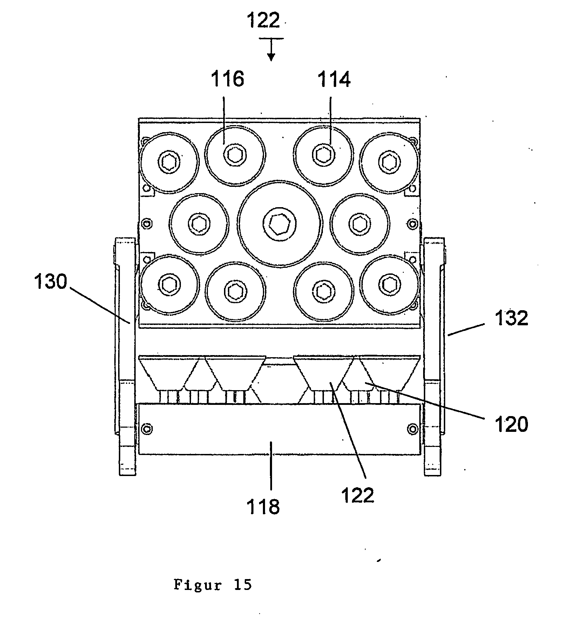

Die Figuren 6 bis 13 zeigen eine weitere besondere Ausführungsform eines Greifsystems gemäß der vorliegenden Erfindung, wobei die Figuren 6 bis 9 das Greifsystem 100 im Einsatz in einer Paketwand in verschiedenen Phasen zeigen und die Figuren 10 bis 13 dasselbe Greifsystem in denselben Phasen, aber ohne Paketwand zeigen. Im übrigen zeigen die Figuren 14 und 15 jeweils eine Vorderansicht des Greifsystems in Anfahr- bzw. Ruheposition und in Greifposition.

Wie sich aus den Figuren 6 bis 15 ergibt, weist das Greifsystem 100 einen ersten Saugnapfgreifer 112 mit mehreren Saugnäpfen, von denen lediglich zwei mit dem Bezugszeichen 114 und 116 versehen sind, der eine Fläche aufweist, die sich in der Anfahr- bzw. Ruheposition vertikal erstreckt, und einen zweiten Saugnapfgreifer 118 mit mehreren Saugnäpfen, von denen nur zwei mit dem Bezugszeichen 120 und 122 versehen sind, auf, dessen Fläche sich in der Anfahr- bzw. Ruheposition horizontal erstreckt, wobei die Saugnäpfe 120 und 122 nach oben zeigen, während die Saugnäpfe 114 und 116 nach vorne, das heißt in Richtung zur vorderen Seitenfläche 124 eines Pakets 126 zeigen. Der erste Saugnapfgreifer 112 ist an einer Basis 128 befestigt, an der auch der zweite Saugnapfgreifer 118 mittels zweiter Pendelstützenpaare 130 und 132 parallel versetzbar angeordnet ist. Dazu ist jedem Pendelstützenpaar 130 bzw. 132 ein Pneumatikzylinder 134 bzw. 136 zugeordnet. Sowohl der Pneumatikzylinder 134 bzw. 136 als auch die Pendelstützenpaare 130 und 132 sind jeweils an der Basis 128 gelenkig angebracht. Die anderen Enden der Pendelstützenpaare 130 bzw. 132 sind jeweils seitlich an dem zweiten Saugnapfgreifer 118 gelenkig angebracht. Das andere Ende des jeweiligen Pneumatikzylinders 134 bzw. 136 ist an einer Pendelstützen der Pendelstützenpaare 130 und 132 gelenkig angebracht. In der in den Figuren 6 und 10 gezeigten Anfahr- bzw. Ruheposition des Greifsystems 100 ist das Greifsystem so kompakt, daß - wie in Figur 6 gezeigt - auch ein Paket 126 an dessen vorderen Seitenfläche 124 mittels des ersten Saugnapfgreifers 112 ergriffen werden kann, das etwas gegenüber den restlichen Paketen zurücksteht. Dies wird dadurch erreicht, daß die Pendelstützenpaare 130 und 132 sowie Pneumatikzylinder 134 und 136 so seitlich und der zweite Saugnapfgreifer 118 so angeordnet werden, daß bei Betrachtung von der Ansaugseite des ersten Saugnapfgreifers 112, das heißt von dem Paket 126 diese nicht seitlich über den ersten Saugnapfgreifer 112 vorragen.

In Figur 6 wird der erste Saugnapfgreifer 112 dazu verwendet, das Paket 126 an dessen vorderen Seitenfläche 124 anzusaugen und aus der Paketwand nach hinten zu ziehen (in Figur 10 nach links).

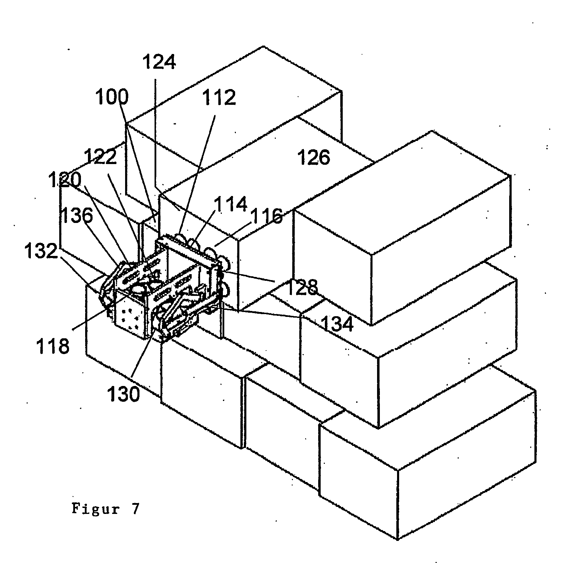

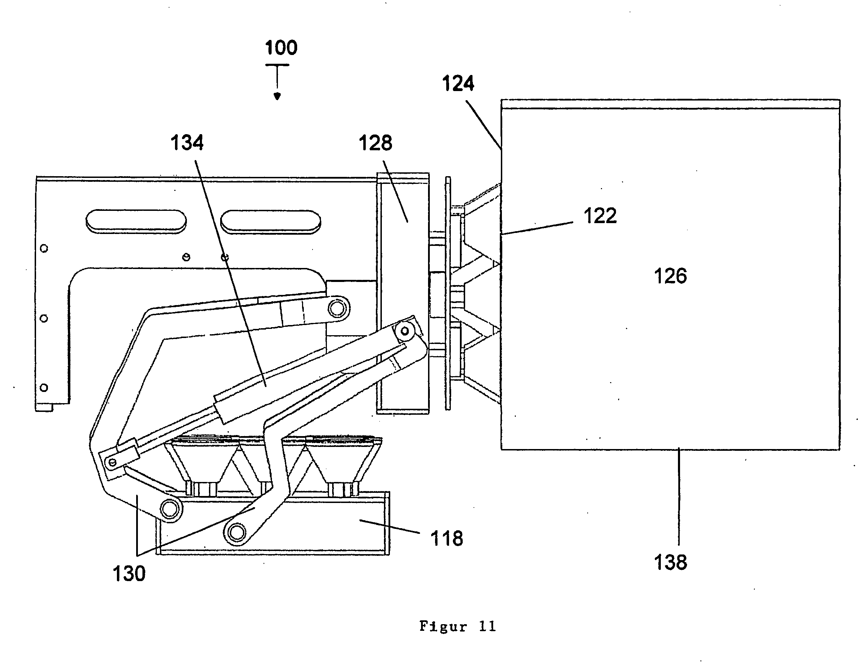

In den Figur 7 und 11 sind die Pneumatikzylinder 134 und 136 schon etwas eingezogen, so daß der zweite Saugnapfgreifer 118 bereits schräg nach unten bewegt wird.

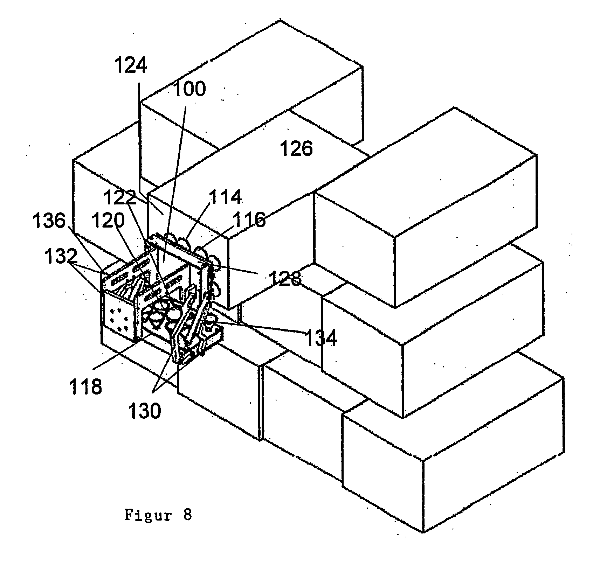

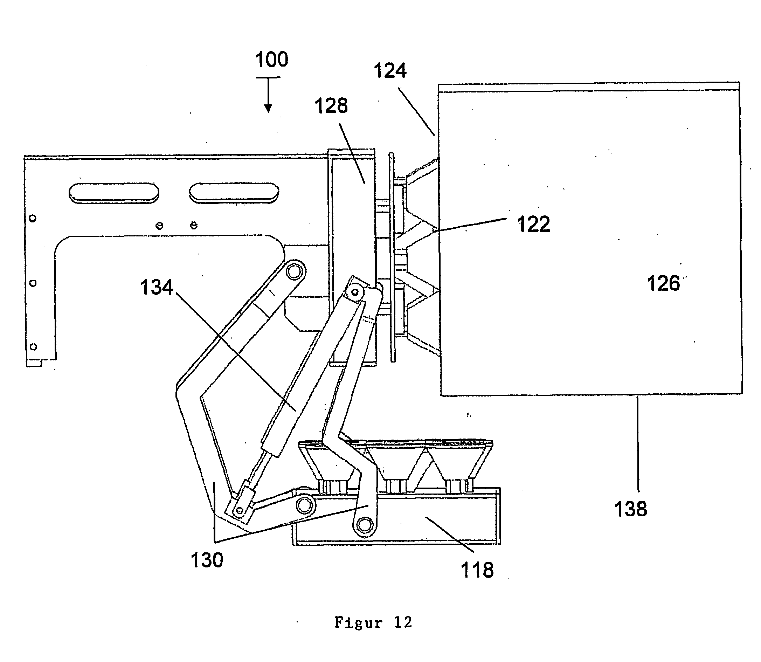

In den Figuren 8 und 12 sind die Pneumatikzylinder 134 und 136 noch weiter eingezogen, wodurch die Pendelstützen gespreizt werden und ein paralleler Versatz erzeugt wird. Es hat zur Folge, daß der zweiten Saugnapfgreifer 118 noch weiter in Richtung auf das Paket 126 und unter dessen untere Seitenfläche 138 bewegt worden ist.

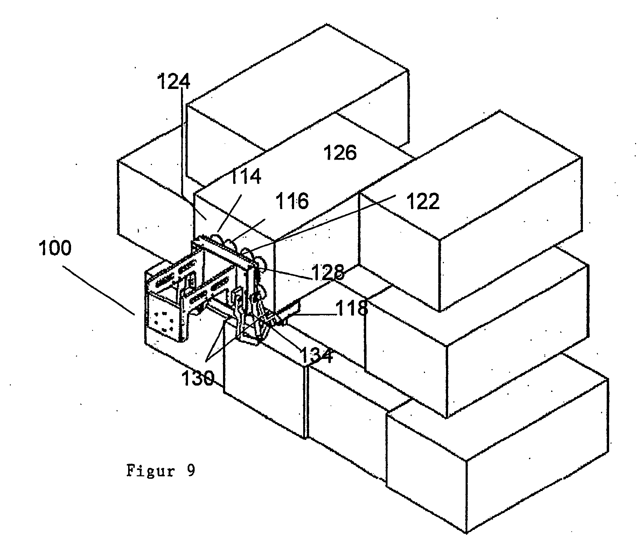

In den Figuren 9 und 10 ist der zweite Saugnapfgreifer 118 nun so weit aus seiner Anfahr-bzw. Ruheposition in die Greifposition parallel versetzt worden, daß er nunmehr an der unteren Seitenfläche 138 anliegt.

Das Greifsystem 100 kann je nach Anwendung um 180° gedreht werden, um deckenhohe oder normal erreichbare oder auf dem Boden liegende Pakete zu greifen. Die Pneumatikzylinder 134 und 136 erzeugen nur die für die Umpositionierung des zweiten Saugnapfgreifers 118 notwendige Kraft. In seiner Greifposition ist das Greifsystem 100 selbstverstärkend, da eine horizontale Bewegung durch das angesaugte Paket vermieden wird und somit kein vertikaler Versatz möglich ist. Ist das Greifsystem 100 um 180° gedreht und geöffnet, hängt der zweite Saugnapfgreifer 118 in seiner Position und verharrt er dort ohne weiteren Energieeinsatz. Die Antriebe und richtungsweisenden Elemente sind seitlich angeordnet.

Ein Paket ist ebenfalls in einem Korridor zu erreichen, da in der Anfahr- bzw. Ruheposition des Greifsystems 100 die vordere Seitenfläche des kleinsten Paketes nicht überschritten wird.

Die in der vorliegenden Beschreibung, in den Zeichnungen sowie in den Ansprüchen offenbarten Merkmale der Erfindung können sowohl einzeln als auch in beliebigen Kombinationen für die Verwirklichung der Erfindung in ihren verschiedenen Ausführungsformen wesentlich sein.

## Patentansprüche

1. Greifsystem (10; 100) für gestapeltes Stückgut, umfassend
eine erste Greifeinheit zum Greifen eines Stückgutes von dessen vorderen Seitenfläche (16; 124),
eine zweite Greifeinheit zum Greifen eines Stückgutes von einer im rechten Winkel zu dessen vorderen Seitenfläche (16) stehenden zweiten Seitenfläche, und
eine Antriebseinrichtung für die zweite Greifeinheit,
**dadurch gekennzeichnet, daß**
die zweite Greifeinheit aus einer Anfahr- bzw. Ruheposition, in der die zweite Greifeinheit und die Antriebseinrichtung bei Betrachtung von der Greifseite der ersten Greifeinheit hinter der ersten Greifeinheit angeordnet sind und die Außenabmessungen des Greifsystems bei Betrachtung von der Greifseite der ersten Greifeinheit nicht die Abmessungen der vorderen Seitenfläche eines erwarteten kleinsten zu ergreifenden Stückgutes überschreiten, in eine Greifposition bringbar ist, in der die erste Greifeinheit zum Greifen des Stückgutes von dessen vorderen Seitenfläche (16) positioniert ist und die zweite Greifeinheit zum Greifen des Stückgutes von dessen zweiten Seitenfläche positioniert ist.

2. Greifsystem (10; 100) nach Anspruch 1, **dadurch gekennzeichnet, daß** die zweite Greifeinheit und die Antriebseinrichtung bei Betrachtung von der Greifseite der ersten Greifeinheit so dimensioniert und hinter der ersten Greifeinheit angeordnet sind, daß sie nicht über die erste Greifeinheit seitlich überstehen.

3. Greifsystem (10; 100) nach Anspruch 1 oder 2, **dadurch gekennzeichnet, daß** mindestens eine der ersten und zweiten Greifeinheiten ein Sauggreifer, ein Magnetgreifer, ein Nadelgreifer, ein Elektrostatikgreifer oder ein Adhäsionsgreifer ist.

4. Greifsystem (10; 100) nach Anspruch 3, **dadurch gekennzeichnet, daß** der Sauggreifer ein Saugnapfgreifer (112; 118), Flachsauggreifer, Faltenbalgsauggreifer oder Flächensauggreifer (12, 14) ist.

5. Greifsystem (10; 100) nach einem der vorangehenden Ansprüche, **dadurch gekennzeichnet, daß** die zweite Seitenfläche die untere (26; 138) oder obere Seitenfläche eines Stückgutes ist.

6. Greifsystem (10; 100) nach einem der vorangehenden Ansprüche, **dadurch gekennzeichnet, daß** in der Anfahr- bzw. Ruheposition die zweite Greifeinheit im rechten Winkel zur ersten Greifeinheit angeordnet ist.

7. Greifsystem (10; 100) nach einem der vorangehenden Ansprüche, **dadurch gekennzeichnet, daß** eine mit einer Steuereinrichtung für ein Handhabungsgerät, insbesondere Roboter, und der Antriebseinrichtung verbindbare Sensoreinheit, die einen Scanner und/oder eine CCD-Kamera umfaßt, zur Bestimmung des Abstandes und/oder einer Lageposition des jeweils zu ergreifenden Stückgutes und/oder eines Ansatzpunktes auf der vorderen Seitenfläche (16) des zu ergreifenden Stückgutes und Positionierung des zu ergreifenden Stückgutes vorgesehen ist.

8. Greifsystem (10; 100) nach einem der vorangehenden Ansprüche, **dadurch gekennzeichnet, daß** es mittels einer Steuereinrichtung so steuerbar ist, daß erst die erste Greifeinheit die vordere Seitenfläche (16; 124) des Stückgutes ergreift und danach die zweite Greifeinheit die zweite Seitenfläche des Stückgutes ergreift.

9. Greifsystem (10; 100) nach einem der vorangehenden Ansprüche, **dadurch gekennzeichnet, daß** die Antriebseinrichtung eine Schwenk- bzw. Dreheinrichtung zum Schwenken bzw. Drehen der zweiten Greifeinheit aus der Anfahr- bzw. Ruheposition in die Greifposition umfaßt.

10. Greifsystem (10, 100) nach Anspruch 9, **dadurch gekennzeichnet, daß** die zweite Greifeinheit mittels der Schwenk- bzw. Dreheinrichtung um eine horizontale oder vertikale Achse schwenk- bzw. drehbar ist.

11. Greifsystem (100) nach einem der Ansprüche 1 bis 8, **dadurch gekennzeichnet, daß** die Antrichseinrichtung eine Parallelversetzeinrichtung zum parallelen Versetzen der zweiten Greifeinheit aus der Anfahr- bzw. Ruheposition in die Greifposition umfaßt.

12. Greifsystem (100) nach Anspruch 11, **dadurch gekennzeichnet, daß** die Parallelversetzeinrichtung zwei jeweils mittels eines Pneumatikzylinders (134, 136) antreibbare Pendelstützenpaare (130; 132) umfaßt.

13. Greifsystem (10, 100) nach Anspruch 11, **dadurch gekennzeichnet, daß** die Parallelversetzeinrichtung eine elliptische Führung und einen Linearantrieb umfaßt.

14. Grcifsystcm (10; 100) nach einem der Ansprüche 1 bis 8, **dadurch gekennzeichnet, daß** die Antriebseinrichtung eine Klappeinrichtung zum Klappen der zweiten Greifeinheit aus der Anfahr- bzw. Ruheposition in die Greifposition umfaßt.

15. Greifsystem (10; 100) nach Anspruch 14, **dadurch gekennzeichnet, daß** die zweite Greifeinheit mittels der Klappeinrichtung um eine horizontale oder vertikale Achse klappbar ist.

16. Greifsystem (10) nach einem der Ansprüche 4 bis 8, **dadurch gekennzeichnet, daß** eine Antriebseinrichtung für die erste Greifeinheit vorgesehen ist und die ersten und zweiten Greifeinheiten aus einer Anfahr- bzw. Ruheposition, in der die zweite Greifeinheit und die Antriebseinrichtungen für die ersten und zweiten Greifeinheiten bei Betrachtung von der Greifseite der ersten Greifeinheit so hinter der ersten Greifeinheit angeordnet sind, daß sie nicht über die erste Greifposition überstehen, in eine Greifposition bringbar sind, in der die erste Greifeinheit zum Greifen des Stückgutes von den vorderen Seitenflächen (16; 124) positioniert ist und die zweite Greifeinheit zum Greifen des Stückgutes von deren zweiten Seitenfläche positioniert ist.

17. Greifsystem (10) nach Anspruch 16, **dadurch gekennzeichnet, daß** die erste Greifeinheit ein erster Flächensauggreifer (12) ist, die zweite Greifeinheit ein zweiter Flächensauggreifer (14) ist, die Antriebseinrichtung für die erste Greifeinheit einen ersten Linearantrieb (20) zum horizontalen Verfahren des ersten Flächensauggreifers (12) in der Saugkraft-Wirkrichtung des ersten Flächensauggreifers (12) und einen zweiten Linearantrieb zum vertikalen Verfahren des ersten Linearantriebs (20) umfaßt und die Antriebseinrichtung für die zweite Greifeinheit einen dritten Linearantrieb zum horizontalen Verfahren des zweiten Flächensauggreifers (14) in der Saugkraft-Wirkrichtung des ersten Flächesauggreifers umfaßt, wobei die ersten und dritten Linearantriebe in einer vertikalen Ebene über- bzw. untereinander angeordnet sind.

18. Greifsystem (10) nach Anspruch 17, **dadurch gekennzeichnet, daß** mindestens einer der ersten, zweiten und dritten Linearantriebe einen geführten Zylinder (22, 24) umfaßt.

19. Greifsystem (10) nach Anspruch 17, **dadurch gekennzeichnet, daß** mindestens einer der ersten, zweiten und dritten Linearantriebe ein kolbenstangenloser Linearantrieb ist.

20. Greifsystem (10) nach einem der Ansprüche 17 bis 19, **dadurch gekennzeichnet, daß** mindestens einer der ersten, zweiten und dritten Linearantriebe pneumatisch betreibbar ist.

## Claims

1. A gripping system (10; 100) for stacked packages and parcels, comprising
a first gripping unit for gripping a package or parcel from its front surface (16; 124),
a second gripping unit for gripping a package or parcel from a second surface that is positioned at a right angle relative to the front surface (16), and
a drive device for the second gripping unit,
**characterized in that**
the second gripping unit can be moved from a starting or resting position - in which the second gripping unit and the drive device, as viewed from the gripping side of the first gripping unit, are arranged behind the first gripping unit, and the external dimensions of the gripping system, as viewed from the gripping side of the first gripping unit, do not exceed the dimensions of the front surface of the smallest package or parcel that is expected to be gripped - into a gripping position in which the first gripping unit is positioned so as to grip the package or parcel from its front surface (16), and the second gripping unit is positioned so as to grip the package or parcel from its second surface.

2. The gripping system (10; 100) according to Claim 1, **characterized in that** the second gripping unit and the drive device, as viewed from the gripping side of the first gripping unit, are dimensioned and arranged behind the first gripping unit in such a way that they do not project laterally beyond the first gripping unit.

3. The gripping system (10; 100) according to Claim 1 or 2, **characterized in that** at least one of the first and second gripping units is a suction gripper, a magnetic gripper, a needle gripper, an electrostatic gripper or an adhesion gripper.

4. The gripping system (10; 100) according to Claim 3, **characterized in that** the suction gripper is a suction-cup gripper (112; 118), a flat suction gripper, a bellows suction gripper or a surface suction gripper (12, 14).

5. The gripping system (10; 100) according to one of the preceding claims, **characterized in that** the second surface is the bottom surface (26; 138) or top surface of a package or parcel.

6. The gripping system (10; 100) according to one of the preceding claims, **characterized in that**, in the starting or resting position, the second gripping unit is arranged at a right angle relative to the first gripping unit.

7. The gripping system (10; 100) according to one of the preceding claims, **characterized in that** a sensor unit - which can be connected to a control unit for a handling device, especially a robot, and to the drive device - comprising a scanner and/or a CCD camera is provided for purposes of determining the distance and/or a physical position of the package or parcel that is to be gripped and/or a reference point on the front surface (16) of the package or parcel that is to be gripped, and said sensor unit is also provided for purposes of positioning the package or parcel that is to be gripped.

8. The gripping system (10; 100) according to one of the preceding claims, **characterized in that** it can be controlled by means of a control device in such a way that, to start with, the first gripping unit grasps the front surface (16; 124) of the package or parcel, and subsequently, the second gripping unit grasps the second surface of the package or parcel.

9. The gripping system (10; 100) according to one of the preceding claims, **characterized in that** the drive device comprises a pivoting or rotating device to pivot or rotate the second gripping unit from the starting or resting position into the gripping position.

10. The gripping system (10; 100) according to Claim 9, **characterized in that** the second gripping unit can be pivoted or rotated around a horizontal or vertical axis by means of the pivoting or rotating device.

11. The gripping system (100) according to one of Claims 1 to 8, **characterized in that** the drive device comprises a parallel-displacement device for the parallel displacement of the second gripping unit from the starting or resting position into the gripping position.

12. The gripping system (100) according to Claim 11, **characterized in that** the parallel-displacement device comprises two articulated-column pairs (130; 132) that can be driven by a pneumatic cylinder (134, 136).

13. The gripping system (10; 100) according to Claim 11, **characterized in that** the parallel-displacement device comprises an elliptical guide and a linear drive.

14. The gripping system (10; 100) according to one of Claims 1 to 8, **characterized in that** the drive device comprises a swinging device to swing the second gripping unit from the starting or resting position into the gripping position.

15. The gripping system (10; 100) according to Claim 14, **characterized in that** the second gripping unit can be swung around a horizontal or vertical axis by means of the swinging device.

16. The gripping system (10) according to one of Claims 4 to 8, **characterized in that** a drive device is provided for the first gripping unit, and the first and second gripping units can be moved from a starting or resting position - in which the second gripping unit and the drive devices for the first and second gripping units, as viewed from the gripping side of the first gripping unit, are arranged behind the first gripping unit in such a way they do not project beyond the first gripping unit - into a gripping position in which the first gripping unit is positioned so as to grip the package or parcel from the front surface (16; 124), and the second gripping unit is positioned so as to grip the package or parcel from its second surface.

17. The gripping system (10) according to Claim 16, **characterized in that** the first gripping unit is a first surface suction gripper (12), the second gripping unit is a second surface suction gripper (14), the drive device for the first gripping unit comprises a first linear drive (20) to horizontally move the first surface suction gripper (12) in the effective direction of the suction force of the first surface suction gripper (12) and a second linear drive to vertically move the first linear drive (20), and the drive device for the second gripping unit comprises a third linear drive to horizontally move the second surface suction gripper (14) in the direction of the suction force of the first surface suction gripper, whereby the first and third linear drives are arranged above or below each other in a vertical plane.

18. The gripping system (10) according to Claim 17, **characterized in that** at least one of the first, second and third linear drives comprises a guided cylinder (22, 24).

19. The gripping system (10) according to Claim 17, **characterized in that** at least one of the first, second and third linear drives is a linear drive without a piston rod.

20. The gripping system (10) according to one of Claims 17 to 19, **characterized in that** at least one of the first, second and third linear drives can be operated pneumatically.

## Revendications

1. Système de préhension pour marchandises de détail empilées, comprenant
- une première unité de préhension pour prendre une marchandise de détail par sa face latérale avant (16; 124),
- une deuxième unité de préhension pour prendre une marchandise de détail par une deuxième face latérale située à angle droit de la face latérale avant (16) de celui-ci et
- un dispositif d'entraînement pour la deuxième unité de préhension,
**caractérisé en ce que**
- la deuxième unité de préhension peut, à partir d'une position de démarrage ou de repos dans laquelle la deuxième unité de préhension et le dispositif d'entraînement, vus depuis le côté de préhension de la première unité de préhension, sont situés derrière la première unité de préhension et les dimensions extérieures du système de préhension, vues depuis le côté de préhension de la première unité de préhension, ne dépassent pas les mesures de la face latérale avant d'une marchandise de détail à prendre, qui est attendue être la plus petite, être placée dans une position de préhension dans laquelle la première unité de préhension est positionnée pour prendre la marchandise de détail par la face latérale avant (16) de celui-ci et la deuxième unité de préhension est positionnée pour prendre la marchandise de détail par la deuxième face latérale de celui-ci.

2. Système de préhension (10; 100) selon la revendication 1, **caractérisé en ce que** la deuxième unité de préhension et le dispositif d'entraînement, vus depuis le côté de préhension de la première unité de préhension, sont dimensionnés et situés derrière la première unité de préhension de manière telle qu'ils ne dépassent pas latéralement la première unité de préhension.

3. Système de préhension (10; 100) selon la revendication 1 ou 2, **caractérisé en ce qu'**au moins l'une des première et deuxième unités de préhension est un préhenseur aspirant, un préhenseur magnétique, un préhenseur à aiguille, un préhenseur électrostatique ou un préhenseur basé sur l'adhésion.

4. Système de préhension (10; 100) selon la revendication 3, **caractérisé en ce que** le préhenseur aspirant est un préhenseur à ventouse(s) (112; 118), un préhenseur à ventouse(s) plate(s), un préhenseur à ventouse(s) à soufflet(s) ou un préhenseur à surface ventouse (12, 14).

5. Système de préhension (10; 100) selon l'une des revendications précédentes, **caractérisé en ce que** la deuxième face latérale est la face latérale inférieure (26; 138) ou supérieure d'une marchandise de détail.

6. Système de préhension (10; 100) selon l'une des revendications précédentes, **caractérisé en ce que** la deuxième unité de préhension, dans la position de démarrage ou de repos, est située à angle droit de la première unité de préhension.

7. Système de préhension (10; 100) selon l'une des revendications précédentes, **caractérisé en ce qu'**est prévue une unité de détection reliable à un dispositif de commande pour un appareil de manipulation, en particulier un robot, et au dispositif d'entraînement, laquelle unité comporte un scanner et/ou une caméra CCD, pour déterminer la distance et/ou une position de chaque marchandise de détail à prendre et/ou un point de prise sur la face latérale avant (16) de la marchandise de détail à prendre et pour positionner la marchandise de détail à prendre.

8. Système de préhension (10; 100) selon l'une des revendications précédentes, **caractérisé en ce qu'**il peut être commandé de manière telle, au moyen d'un dispositif de commande, que la première unité de préhension saisit d'abord la face latérale avant (16; 124) de la marchandise de détail et que la deuxième unité de préhension saisit ensuite la deuxième face latérale de la marchandise de détail.

9. Système de préhension (10; 100) selon l'une des revendications précédentes, **caractérisé en ce que** le dispositif d'entraînement comprend un dispositif de pivotement ou de rotation pour faire pivoter ou tourner la deuxième unité de préhension de la position de démarrage ou de repos à la position de préhension.

10. Système de préhension (10; 100) selon la revendication 9, **caractérisé en ce que** la deuxième unité de préhension peut pivoter ou tourner autour d'un axe horizontal ou vertical au moyen du dispositif de pivotement ou de rotation.

11. Système de préhension (100) selon l'une des revendications 1 à 8, **caractérisé en ce que** le dispositif d'entraînement comprend un dispositif de décalage parallèle pour décaler parallèlement la deuxième unité de préhension de la position de démarrage ou de repos à la position de préhension.

12. Système de préhension (100) selon la revendication 11, **caractérisé en ce que** le dispositif de décalage parallèle comprend deux paires d'appuis pendulaires (130; 132) entraînables respectivement au moyen d'un cylindre pneumatique (134, 136).

13. Système de préhension (10; 100) selon la revendication 11, **caractérisé en ce que** le dispositif de décalage parallèle comprend un guidage elliptique et un entraînement linéaire.

14. Système de préhension (10; 100) selon l'une des revendications 1 à 8, **caractérisé en ce que** le dispositif d'entraînement comprend un dispositif de basculement pour basculer la deuxième unité de préhension de la position de démarrage ou de repos à la position de préhension.

15. Système de préhension (10; 100) selon la revendication 14, **caractérisé en ce que** la deuxième unité de préhension est basculable autour d'un axe horizontal ou vertical au moyen d'un dispositif de basculement.

16. Système de préhension (10) selon l'une des revendications 4 à 8, **caractérisé en ce qu'**un dispositif d'entraînement est prévu pour la première unité de préhension et les première et deuxième unités de préhension peuvent, à partir d'une position de démarrage ou de repos dans laquelle la deuxième unité de préhension et les dispositifs d'entraînement des première et deuxième unités de préhension, vus depuis le côté de préhension de la première unité de préhension, sont situés de manière telle derrière la première unité de préhension qu'ils ne dépassent pas la première position de préhension, être placées dans une position de préhension dans laquelle la première unité de préhension est positionnée pour prendre la marchandise de détail par ses faces latérales avant (16; 124) et la deuxième unité de préhension est positionnée pour prendre la marchandise de détail par la deuxième face latérale de celui-ci.

17. Système de préhension (10) selon la revendication 16, **caractérisé en ce que** la première unité de préhension est un premier préhenseur à surface ventouse (12), la deuxième unité de préhension est un deuxième préhenseur à surface ventouse (14), le dispositif d'entraînement pour la première unité de préhension comporte un premier entraînement linéaire (20) pour le déplacement horizontal du premier préhenseur à surface ventouse (12) dans le sens de l'action de la force d'aspiration du premier préhenseur à surface ventouse (12) et un deuxième entraînement linéaire pour le déplacement vertical du premier entraînement linéaire (20) et le dispositif d'entraînement pour la deuxième unité de préhension comprend un troisième entraînement linéaire pour le déplacement horizontal du deuxième préhenseur à surface ventouse (14) dans le sens de l'action de la force d'aspiration du premier préhenseur à surface ventouse, les premier et troisième entraînements linéaires était situés l'un au-dessus ou l'un en dessous de l'autre dans un plan vertical.

18. Système de préhension (10) selon la revendication 17, **caractérisé en ce qu'**au moins l'un des premier, deuxième et troisième entraînements linéaires comprend un cylindre guidé (22, 24).

19. Système de préhension (10) selon la revendication 17, **caractérisé en ce qu'**au moins l'un des premier, deuxième et troisième entraînements linéaires est un entraînement linéaire sans tige de piston.

20. Système de préhension (10) selon l'une des revendications 17 à 19, **caractérisé en ce qu'**au moins l'un des premier, deuxième et troisième entraînements linéaires peut fonctionner pneumatiquement.
